# DEMANDE DE BREVET EUROPEEN

(11) **EP 0 825 775 A1**
(43) Date de publication de la demande: **25.02.1998**
(21) Numéro de dépôt: 97202456.6
(22) Date de dépôt: 08.08.1997
(51) Int. Cl.: H04N 7/20

(54) **Récepteur-décodeur de télévision**

(30) Priorité: 13.08.1996 FR 9610150
(71) Demandeur: Philips Electronics N.V., 5621 BA Eindhoven (NL)
(72) Inventeur: Loyer, Phillipe, Société Civile S.P.I.D., 75008 Paris (FR)
(74) Mandataire: Caron, Jean

(57) **Abrégé**

Pour permettre l'alimentation d'un bloc dit convertisseur satellite avec plusieurs récepteurs-décodeurs distincts reliés au même bloc convertisseur satellite par un câble qui transmet à la fois un signal à fréquence intermédiaire et une tension d'alimentation destinée au bloc convertisseur satellite, les récepteurs-décodeurs sont connectés en cascade et le récepteur-décodeur amont (5) comporte un module (23) de transfert qui, lorsque le récepteur-décodeur amont n'est pas en service, transmet le signal à fréquence intermédiaire d'un connecteur de liaison avec le bloc convertisseur satellite (8) vers un connecteur de liaison (9) avec un récepteur-décodeur aval, et transmet entre les mêmes connecteurs, dans l'autre direction, une tension d'alimentation.

Applications : réception de télévision par satellite

## Description

La présente invention concerne un procédé pour permettre l'alimentation d'un bloc dit convertisseur satellite lors de l'utilisation de plusieurs récepteurs-décodeurs distincts reliés au même bloc convertisseur satellite par un câble dit principal destiné à transmettre d'une part un signal à fréquence intermédiaire depuis le bloc convertisseur satellite et d'autre part une tension d'alimentation et éventuellement de commande à basse fréquence vers le bloc convertisseur satellite.

Elle concerne aussi un récepteur-décodeur de télévision et un module de transfert dans lesquels le procédé est mis en oeuvre.

Un ensemble de réception satellite comporte une parabole qui concentre un signal dans la gamme de 12 GHz vers un bloc convertisseur satellite, lequel convertit le signal en un signal à fréquence intermédiaire dans la gamme des 1 GHz, et ce signal est transmis par un câble à un récepteur-décodeur, lequel sélectionne un canal et le démodule pour engendrer un signal vidéo et un signal audio, fournis par exemple à un téléviseur conventionnel. Le bloc convertisseur satellite ne possède pas d'alimentation propre, il est alimenté, via le câble, par une alimentation située dans le récepteur-décodeur. Un problème se pose lorsqu'un même bloc convertisseur satellite est relié à plusieurs récepteurs-décodeurs, car il risque d'y avoir conflit entre les tensions d'alimentation envoyées sur le même câble par plusieurs récepteurs-décodeurs, et en outre il est nécessaire de répartir le signal sur les différents récepteurs-décodeurs. Une solution à ce problème est connue du document US 5,134,486. Selon ce document, chaque récepteur-décodeur comporte un interrupteur permettant de fournir ou non une alimentation sur le câble, et un module distributeur répartit le signal entre différents récepteurs-décodeurs. L'utilisateur doit actionner lui même les interrupteurs.

Un objet de l'invention est d'obtenir un fonctionnement transparent à l'égard d'un utilisateur, c'est-à-dire que ce dernier n'ait pas besoin d'intervenir pour commuter des interrupteurs.

A cet effet, les récepteurs-décodeurs sont connectés en cascade et reliés deux à deux à chaque fois par un câble dit de liaison, et au moins le récepteur-décodeur qui est connecté directement au bloc convertisseur satellite met en relation, pour des signaux à la fréquence intermédiaire, le câble principal avec le câble de liaison et, lorsqu'il n'est pas lui même en service, met en relation du point de vue des fréquences basses le câble de liaison et le câble principal, pour transmettre une tension d'alimentation et éventuellement une tension de commande.

Un récepteur-décodeur de télévision selon l'invention comporte des moyens de liaison pour le connecter à un autre récepteur-décodeur, et un module de transfert qui comprend des moyens détecteurs pour détecter quand le récepteur-décodeur n'est pas en service, et mettre alors en oeuvre des moyens de transfert pour transmettre une tension d'alimentation et éventuellement de commande depuis l'autre récepteur-décodeur vers le câble principal.

Un module de transfert selon l'invention est muni de moyens pour transmettre une tension d'alimentation et éventuellement de commande vers le câble, depuis l'un ou l'autre parmi plusieurs récepteurs-décodeurs.

Les moyens de transfert comportent un commutateur en série avec au moins une inductance, le commutateur étant actionné par la présence ou non d'une tension d'alimentation du récepteur-décodeur, ou par un microprocesseur de gestion des fonctions du récepteur-décodeur.

Avantageusement, un récepteur-décodeur comprend en outre des moyens pour transmettre un signal à fréquence intermédiaire depuis le câble principal vers le câble de liaison.

Les moyens pour transmettre un signal à fréquence intermédiaire comprennent un amplificateur répartiteur, alimenté par une alimentation permanente, ou alimenté, en fonction d'une information donnée par les moyens détecteurs, soit à partir de l'alimentation du récepteur-décodeur lui même, soit à partir de l'autre récepteur.

Ces aspects de l'invention ainsi que d'autres aspects plus détaillés apparaîtront plus clairement grâce à la description suivante d'un mode de réalisation constituant un exemple non limitatif.

La figure 1 représente schématiquement un système de réception avec trois récepteurs-décodeurs.

La figure 2 donne un exemple de schéma d'un module de transfert dans un récepteur-décodeur.

La figure 3 donne un exemple de schéma d'un module de transfert indépendant.

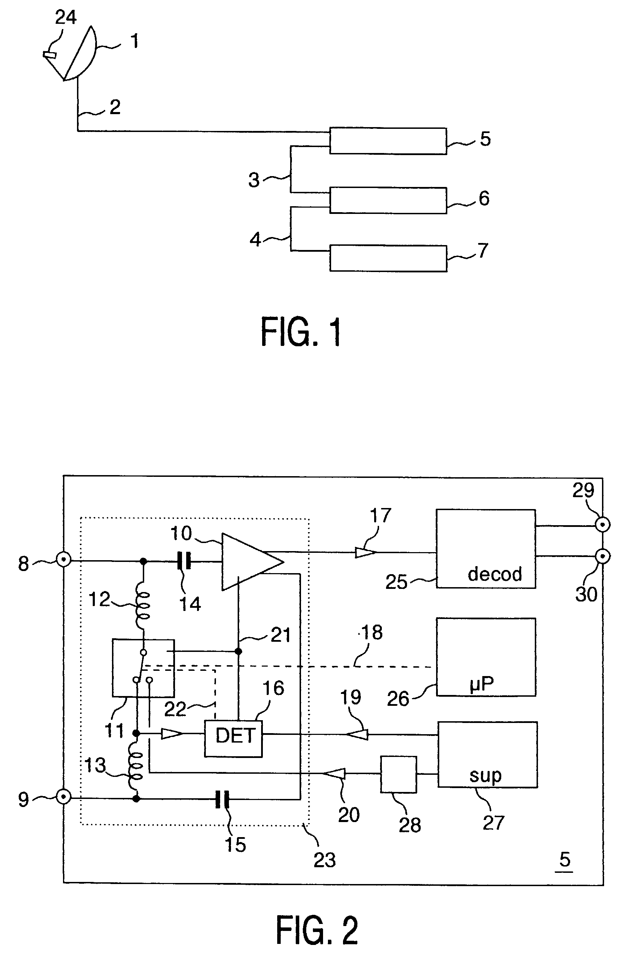

Le système représenté par la figure 1 comporte une parabole 1, qui concentre un signal dans la gamme de 12 GHz vers un bloc 24 convertisseur satellite. Ce bloc convertisseur satellite 24 convertit le signal en un signal à fréquence intermédiaire dans la bande des 1 GHz, qui est transmis par un câble 2 à un récepteur-décodeur 5, lequel sélectionne un canal et le démodule pour engendrer un signal vidéo et un signal audio, fournis par exemple à un téléviseur conventionnel non représenté.

Dans le présent exemple, trois récepteurs-décodeurs distincts 5, 6, 7 sont connectés en cascade et reliés au même bloc convertisseur satellite 24 par un câble principal 2, qui transmet d'une part le signal à fréquence intermédiaire et d'autre part une tension d'alimentation et de commande destinée au bloc convertisseur satellite. Les récepteurs-décodeurs 5 et 6 sont interconnectés au moyen d'un câble 3, et les récepteurs-décodeurs 6 et 7 sont interconnectés au moyen d'un câble 4. Le récepteur-décodeur 5 comporte un module de transfert qui transmet le signal à fréquence intermédiaire depuis le câble principal 2 vers un câble 3 et, lorsque le récepteur-décodeur 5 n'est pas en service, transmet une tension d'alimentation et de commande depuis le câble 3 vers le câble principal 2. Le récepteur-décodeur 6 comporte lui aussi un module de transfert qui transmet le signal à fréquence intermédiaire depuis le câble 3 vers un câble 4 et, lorsque le récepteur-décodeur 6 n'est pas en service, transmet une tension d'alimentation et de commande depuis le câble 4 vers le câble 3.

Un module de transfert 23, par exemple celui du récepteur-décodeur 5, est représenté sur la figure 2. Il est muni de moyens pour transmettre le signal à fréquence intermédiaire depuis un connecteur 8, relié ici au câble principal, vers le récepteur-décodeur 5 par une connexion 17, et vers un connecteur 9 relié ici au câble 3 de liaison avec le récepteur-décodeur 6. Le module 23 est en outre muni de moyens de transfert pour transmettre vers le connecteur 8 une tension d'alimentation et de commande, soit à partir du connecteur 9 relié ici au récepteur-décodeur 6, soit à partir du récepteur-décodeur 5 lui même.

Les moyens pour transmettre le signal à fréquence intermédiaire sont constitués, entre les connecteurs 8 et 9, par une capacité de liaison 14 reliée à l'entrée d'un amplificateur 10 répartiteur, ou d'un amplificateur suivi d'un répartiteur, qui est muni de deux sorties, dont l'une est reliée par une capacité 15 au connecteur 9. L'autre sortie de l'amplificateur 10 est reliée par 17 à un module de décodage 25 connu en soi, qui fournit sur des connecteurs 29 et 30 un signal vidéo et un signal audio. En variante, le signal à fréquence intermédiaire sur le connecteur 8 pourrait, au lieu d'être partagé et fourni en permanence à la fois au module de décodage 25 et au connecteur 9, être transmis par un commutateur, soit vers le module de décodage 25, soit vers le connecteur 9.

Les moyens de transfert pour transmettre une tension d'alimentation et de commande sont constitués, entre les connecteurs 9 et 8, par une inductance 13 reliée à une borne d'un commutateur 11 à deux positions, et la borne commune du commutateur 11 reliée à une inductance 12. Dans la position indiquée par la figure, la borne commune est reliée à l'inductance 13. Une tension en provenance d'une alimentation 27 connue en soi est amenée à l'autre borne du commutateur par une connexion 20. Un module 28 inséré dans la connexion 20 est susceptible d'y ajouter de façon connue une tension de commande à basse fréquence, par exemple à 22 KHz, éventuellement du type dit DiSEqC. Les inductances ont pour but de bloquer les fréquences élevées du signal à fréquence intermédiaire, mais elles ont une valeur telle qu'elles laissent passer les tensions de commande.

Un circuit 16 de détection de la présence et de l'origine d'une tension d'alimentation commande le commutateur 11, au moyen d'un signal de commande indiqué par la référence 22 : si une tension d'alimentation est présente sur le connecteur 9 et pas sur une connexion 19 en provenance de l'alimentation 27, le commutateur 11 est placé dans la position indiquée sur la figure, et dans le cas inverse, l'autre position est sélectionnée. Le circuit 16 transmet en outre à l'amplificateur 10 et éventuellement au commutateur 11 une tension d'alimentation, en provenance soit de la connexion 19, soit du connecteur 9 via l'inductance 13. Ainsi, lorsque le récepteur-décodeur 5 n'est pas en service et que la tension en 19 est absente, c'est la tension d'alimentation sur le connecteur 9 qui est utilisée pour alimenter l'amplificateur 10. Si des tensions sont présentes à la fois sur la connexion 19 et sur le connecteur 9, une des deux positions est prise, ceci dépendant d'un choix fait à priori, et qui est relativement indifférent. En variante, l'amplificateur 10 pourrait être alimenté par un sous-ensemble de l'alimentation 27, continuant à fournir une tension lorsque le récepteur-décodeur 5 est en état de veille.

Le commutateur 11 peut aussi être commandé au moyen d'un signal de commande indiqué par la référence 18, en provenance d'un microprocesseur 26 du récepteur-décodeur 5, le commutateur étant alors commandé au moyen d'un logiciel général de gestion des fonctions du récepteur-décodeur. Par exemple, la réception d'un ordre reçu d'une télécommande et mettant le récepteur-décodeur en veille peut déclencher la mise du commutateur 11 dans la position de la figure.

Le récepteur-décodeur 6 de la figure 1 contient bien entendu un module de transfert identique, pour transmettre le signal à fréquence intermédiaire depuis le câble 3 vers le câble 4 et le récepteur-décodeur 7, et pour transmettre une tension d'alimentation et de commande depuis le câble 4 et le récepteur-décodeur 7 vers le câble 3.

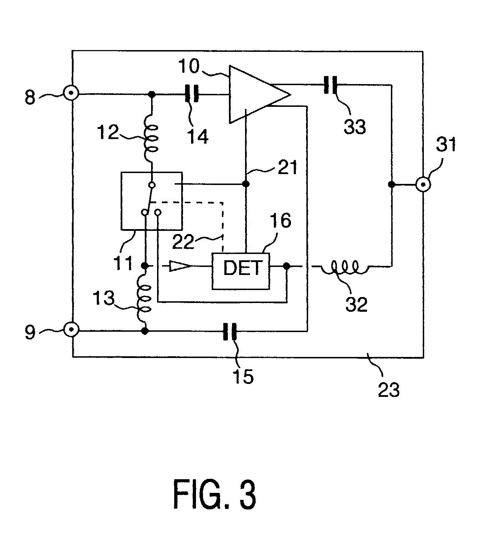

Au lieu d'être intégré dans un récepteur-décodeur, un module de transfert peut aussi être offert séparément, pour permettre aux usagers d'utiliser plusieurs récepteurs-décodeurs reliés au même bloc convertisseur satellite, ces récepteurs-décodeurs ne comportant pas un tel module et possédant chacun un seul connecteur, prévu pour une liaison directe avec un bloc convertisseur satellite. Un tel module séparé, représenté par la figure 3, comporte des éléments semblables à ceux de la figure 2, désignés par les mêmes références. Il comporte les connecteurs 8 et 9, et en plus un connecteur 31 pour la liaison avec le connecteur d'un récepteur-décodeur. L'amplificateur 10 a une sortie reliée via une capacité 33 au connecteur 31, et ce dernier est relié via une inductance 32 d'une part à la borne du commutateur qui était reliée à la connexion 20 dans la figure 2, et d'autre part à une des entrées du circuit 16 de détection. Considérons l'ensemble de la figure 1, en supposant que les récepteurs-décodeurs soient dépourvus de module de transfert et ne possèdent qu'un seul connecteur. Alors un premier module de transfert aurait par exemple son connecteur 8 relié au bloc convertisseur satellite 24, son connecteur 31 relié au récepteur-décodeur 5, et son connecteur 9 relié au connecteur 8 d'un deuxième module de transfert dont le connecteur 9 serait relié au récepteur-décodeur 7 et le connecteur 31 serait relié au récepteur-décodeur 6.

## Revendications

1. Procédé pour permettre l'alimentation d'un bloc dit convertisseur satellite lors de l'utilisation de plusieurs récepteurs-décodeurs distincts reliés au même bloc convertisseur satellite par un câble dit principal destiné à transmettre d'une part un signal à fréquence intermédiaire depuis le bloc convertisseur satellite et d'autre part une tension d'alimentation et éventuellement de commande à basse fréquence vers le bloc convertisseur satellite, **caractérisé en ce que** les récepteurs-décodeurs sont connectés en cascade et reliés deux à deux à chaque fois par un câble dit de liaison, et au moins le récepteur-décodeur qui est connecté directement au bloc convertisseur satellite met en relation, pour des signaux à la fréquence intermédiaire, le câble principal avec le câble de liaison et, lorsqu'il n'est pas lui même en service, met en relation du point de vue des fréquences basses le câble de liaison et le câble principal, pour transmettre une tension d'alimentation et éventuellement une tension de commande.

2. Récepteur-décodeur de télévision destiné à être relié à un bloc convertisseur satellite par un câble dit principal destiné à transmettre d'une part un signal à fréquence intermédiaire depuis le bloc convertisseur satellite et d'autre part une tension d'alimentation et éventuellement de commande vers le bloc convertisseur satellite, **caractérisé en ce qu**'il comporte des moyens de liaison pour le connecter à un autre récepteur-décodeur, et un module de transfert qui comprend des moyens détecteurs pour détecter quand le récepteur-décodeur n'est pas en service, et mettre alors en oeuvre des moyens de transfert pour transmettre une tension d'alimentation et éventuellement de commande depuis l'autre récepteur-décodeur vers le câble principal.

3. Récepteur-décodeur selon la revendication 2, **caractérisé en ce que** les moyens de transfert comportent un commutateur en série avec au moins une inductance, le commutateur étant actionné par la présence ou non d'une tension d'alimentation du récepteur-décodeur.

4. Récepteur-décodeur selon la revendication 2, **caractérisé en ce que** les moyens de transfert comportent un commutateur en série avec au moins une inductance, le commutateur étant actionné par un microprocesseur de gestion des fonctions du récepteur-décodeur.

5. Récepteur-décodeur selon l'une quelconque des revendications 2 à 4, **caractérisé en ce qu**'il comprend en outre des moyens pour transmettre un signal à fréquence intermédiaire depuis le câble principal vers l'autre récepteur.

6. Récepteur-décodeur selon la revendication 5, **caractérisé en ce que** les moyens pour transmettre un signal à fréquence intermédiaire comprennent un amplificateur répartiteur, alimenté par une alimentation permanente.

7. Récepteur-décodeur selon la revendication 5, **caractérisé en ce que** les moyens pour transmettre un signal à fréquence intermédiaire comprennent un amplificateur répartiteur alimenté, en fonction d'une information donnée par les moyens détecteurs, soit à partir de l'alimentation du récepteur-décodeur lui même, soit à partir de l'autre récepteur.

8. Module de transfert permettant l'utilisation de plusieurs récepteurs-décodeurs distincts avec un même bloc convertisseur satellite au moyen d'un câble destiné à transmettre d'une part un signal à fréquence intermédiaire depuis le bloc convertisseur satellite et d'autre part une tension d'alimentation et éventuellement de commande vers le bloc convertisseur satellite, **caractérisé en ce qu**'il est muni de moyens pour transmettre la dite tension vers le câble, soit depuis l'un, soit depuis l'autre des récepteurs-décodeurs.
